# EUROPEAN PATENT SPECIFICATION

(11) **EP 0 452 937 B1**
(45) Date of publication and mention of the grant of the patent: **17.07.1996**
(21) Application number: 91106244.6
(22) Date of filing: 18.04.1991
(51) Int. Cl.: G07F 7/02

(54) **Method for processing cards such as prepaid cards and card processing device therefor**
Verfahren zur Behandlung von Wertkarten und Vorrichtung zur Durchführung des Verfahrens
Méthode et dispositif de traitement de carte prépayée

(30) Priority: 20.04.1990 JP 105709/90
(43) Date of publication of application: 23.10.1991
(73) Proprietor: TOKIN CORPORATION, Sendai-shi Miyagi-ken 982 (JP); THE SUMITOMO CREDIT SERVICE CO. LTD., Kita-ku, Osaka (JP)
(72) Inventor: Yamaguchi, Takao, c/o The Sumitomo Credit, Minato-ku, Tokyo (JP); Takeuchi, Masao, c/o Tokin Corporation, Sendai-shi, Miyagi-ken (JP); Yamamoto, Michiya, c/o Tokin Corporation, Minato-ku, Tokyo (JP); Morishima, Masahiko, c/o Tokin Corporation, Shibuya-ku, Tokyo (JP); Aoyama, Masaaki, 5-2-10 Shinbashi, Minato-ku, Tokyo (JP)
(74) Representative: Prüfer, Lutz H., Dipl.-Phys.

(56) References cited:
- EP-A- 0 061 722
- EP-A- 0 172 476
- EP-A- 0 294 728
- EP-A- 0 356 121
- EP-A- 0 356 243
- WO-A-81/03562
- WO-A-83/00401
- GB-A- 2 207 268

## Description

The present invention relates to cards such as coupon cards, credit cards or the like which are used for obtaining goods or services and, in particular, to processing those cards.

As means for payment in place of cash, there have been known a coupon which is a ticket presented to obtain some article, service, or accommodation, and credit card which is a small card authorizing the person named to charge goods or services.

Recently, a card having a magnetic recording medium has been used in place of the coupon. For example, a public telephone company issues those cards magnetically recording predetermined amounts of money. Users of public telephones purchases those cards and use the cards for payment for use of a public telephone. In detail, when a user desires to use a public telephone, he inserts his card into a card inserting opening of the public telephone set. The public telephone set has a card processing device or a card reader/writer which reads, as a read amount, the amount magnetically recorded in the magnetic recording medium of the card. When he finishes his use of the public telephone, the amount or the content in the magnetic recording medium is rewritten by the card reader/writer. That is, a charge for his use of the public telephone is subtracted from the read amount and the residual amount is rewritten in the card. Therefore, the user can pay his charge without use of coins. These cards issued by the public telephone company will be referred to as a telephone card.

Railroad companies, chain stores, etc. also issue similar cards magnetically recording predetermined amount of money. Users of those companies, chain stores, etc. purchase those cards and then uses not cash but the cards for payment of charges for railroad tickets, articles or services.

Those cards will be called prepaid cards or coupon cards, because money is previously paid by purchase of those cards for future payment for goods or services as the coupon was.

The users of those prepaid cards only scrap them when the residual amount becomes zero.

The credit cards are issued to individuals by credit card companies and are also used by the individuals for payment. The credit cards are assigned with valid time periods. The individuals only scrap their cards after the lapse of the valid time period.

Member's cards are also used for obtaining goods or services in various member's clubs.

Use of those cards has been spread to a certain extent but is has not yet been popularized.

Document EP-A-0 356 121 discloses a transaction system with prepaid cards. The monetary value of the card is stored in re-writable machine readable form on a magnetic tape and visibly printed on a display area of the card after each transaction. In order to reduce the cost of issuing replacement cards when a card is exhausted or nearly exhausted, the current value of the card may be increased under the condition that less than a predetermined area of the display area has already been used up. A premium may be added to the remaining value of the card in order to motivate the user to use the card as long as possible instead of buying a new one.

It is the objedt of the invention to modify the known cards and the known card processing method such that the cards are further popularized.

According to a first aspect of the invention, this object is achieved by a method for processing a card having data recorded thereon for obtaining goods or services, said method comprising reading said data at each use of the card, said data being representative of an amount of money, a valid time period or a number of times the card has been used, comparing the read-out data with a stored predetermined value and indicating a visible mark on the card if the data corresponds to the predetermined value, the mark being representative of the presence of a benefit.

According to a second aspect of the present invention a method for processing cards used for obtaining goods or services by a card processing device is characterized by counting the number of cards processed by said card processing device to produce a counted number, and indicating a visible mark on the card which is processed by the card processing device when the counted number is a predetermined number, the mark being representative of the presence of a benefit.

A card processing device for receiving and processing a card according to the first aspect of the invention, said card having data recorded thereon for obtaining goods or services, said data being representative of an amount of money, a valid time periode or a number of times the card has been used, the device comprising reading means for reading out the data when the card is received in the device, and memory means for storing a predetermined value, characterized by comparing means coupled to the reading means and to the memory means comparing the read-out data with the predetermined value to produce a coincident signal when the read-out data is coincident with the predetermined value, and generating means coupled to the comparing means responsive to the coincident signal for generating a visible mark on the card, the mark bein representative of the presence of a benefit.

A card processing device for processing cards used for obtaining goods or services according to the second aspect of the invention is characterized by counting means for counting the number of cards processed by the card processing device, the counting means being reset and producing a counter output signal when counting a predetermined card number, and generating means coupled to the counting means responsive to the counter output signal for generating a visible mark onto that card which is processed when the counter means counts the predetermined card number, the mark being representative of the presence of a benefit.
Figs. 1a and 1b are a plan and a rear view of an example of a conventional prepaid card, respectively;
Figs. 2a and 2b are a plan and a rear view of a prepaid card according to an embodiment of the present invention, respectively;
Fig. 3 is a view illustrating various examples of a visible mark indicated onto the card of Figs. 2a and 2b;
Fig. 4 is a block diagram view of a card processing device according to an embodiment of the present invention; and
Fig. 5 is a block diagram view of a card processing device according to another embodiment.

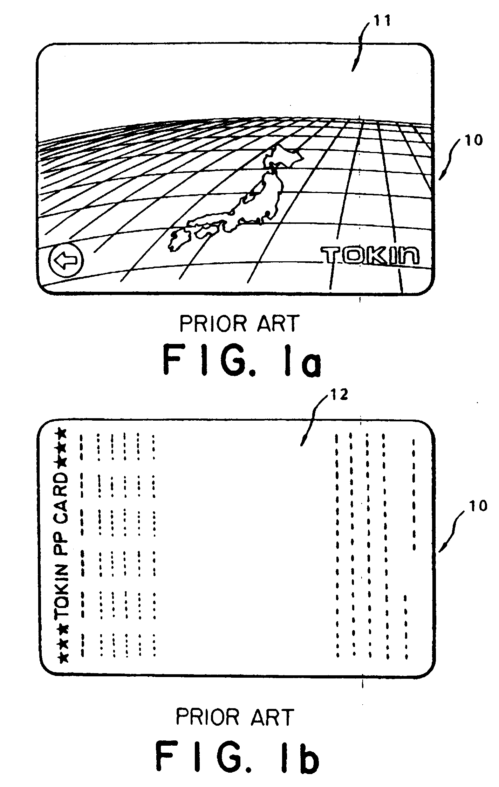

Figs. 1a and 1b are plan and rear view of an example of a conventional magnetic prepaid card. Referring to those figures, 10 represents a card itself, 11 represents a front surface of the card, and 12 is a back surface of the card. Usually, printing is provided onto the front surface 11 for indicating individuality, and others of the card, and magnetic recording medium layer (not shown) and a protective layer for the magnetic recording medium layer (not shown) are provided onto the back surface 12 with statement being printed additionally as shown by dotted lines. In the magnetic recording medium layer, the type of the card and the maximum usable amount of money or usable time number are magnetically recorded. For use of the card, the card is inserted into a card processing device through a deposit opening of the device. The card processing device reads out data recorded in the magnetic recording medium layer and examines whether or not the individuality is correct to admit the use of the card when it is correct, and write into the magnetic recording medium layer the difference value, as a residual value, between the read out value and a value inputted from an input terminal such as ten-key device.

This operation is carried out at each use of the card and the card is invalid when the residual value is zero. Thereafter, the card is scraped.

Another type is also known which treats not the amount of money but used time number as data recorded in the magnetic recording medium layer.

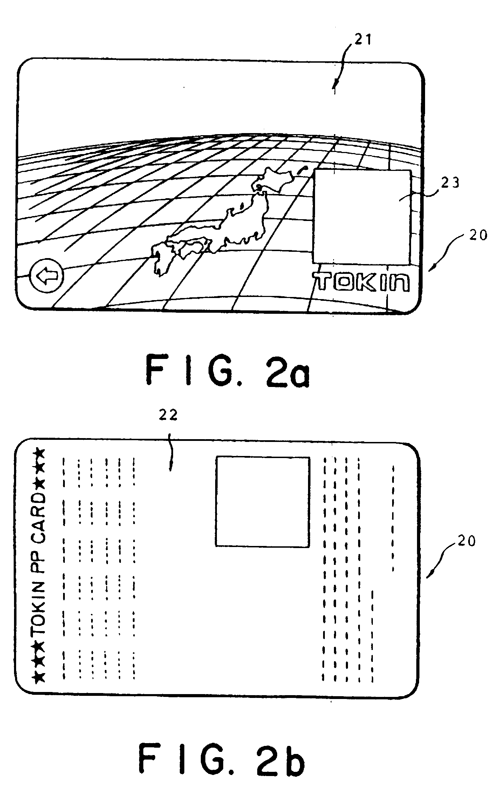

Figs. 2a and 2b are a plan and a rear view of a prepaid card according to an embodiment of the present invention. In the figures, 20 represents the prepaid card body, 21 and 22 represent front and back surfaces of the card, and 23 and 24 represent areas for visibly indicating a mark representative of present of a benefit. The prepaid card 20 is similar to the conventional prepaid card 10 described in connection with Figs. 1a and 1b except provision of the visible indication areas 23 and 24. One of the visible indication areas 23 and 24 can be prepaid.

The prepaid card 20 is processed by the card processing device in the conventional manner at each use of the card. Additionally, the visible mark is indicated at the visible indicating areas 23 and 24 when the residual amount becomes a predetermined value or zero. When the visible mark is indicated, the user of the card can obtain a benefit such as money, goods or others in dependence on the mark indicated.

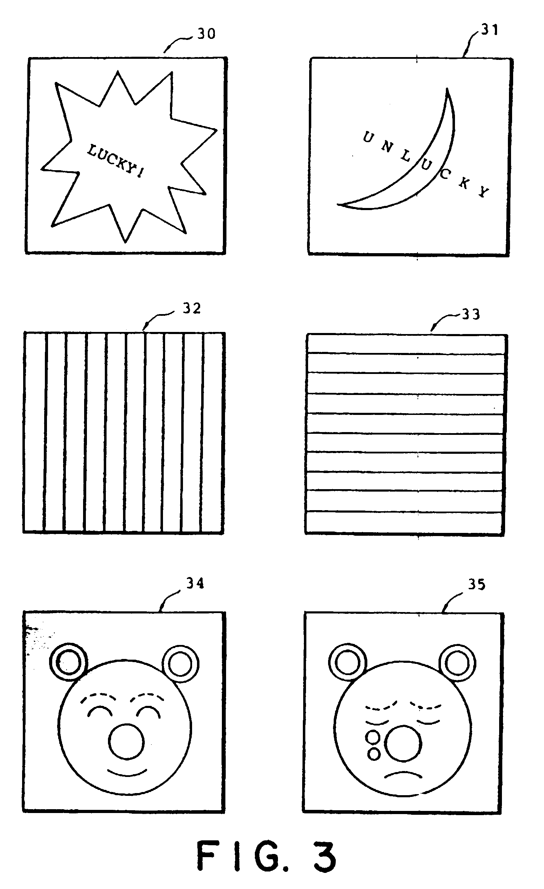

Fig. 3 illustrates various examples of the visible mark indicated in the visible indicating area 23 of Fig. 2a. Referring to Fig. 3, marks 30, 32 and 34 shown at left sides in the figure represent "LUCKY" and marks 31, 33 and 35 shown at right sides represent "UNLUCKY". When the mark representing "LUCKY" is visibly indicated, the user of the card can obtain the benefit, but when the mark representing "UNLUCKY" is visibly indicated, the card user obtain no benefit. It is possible to make all of the cards indicated with visible marks representing "LUCKY", if it is desired to do so.

As means for indicating those visible marks, a printing mechanism is provided in the card processing device as described hereinafter. In one case, the mark is previously invisibly printed by the thermosensitive coloring ink and the card processing device is provided with a heating device as the printing device for coloring the mark by heating to make the visible indication of the mark. Alternatively, the card is not previously prepared and the mark can be printed with ink by a printing device in the card processing device.

It is not necessary that the visible indication area 23 or 24 is specified as a limited blank area as shown in Figs. 2a and 2b. In the case where the visible indication area is not specified as the limited blank area, it is readily possible in the printing manner similar to the above-described manner to indicate the visible mark at a certain limited area on one surface of the card.

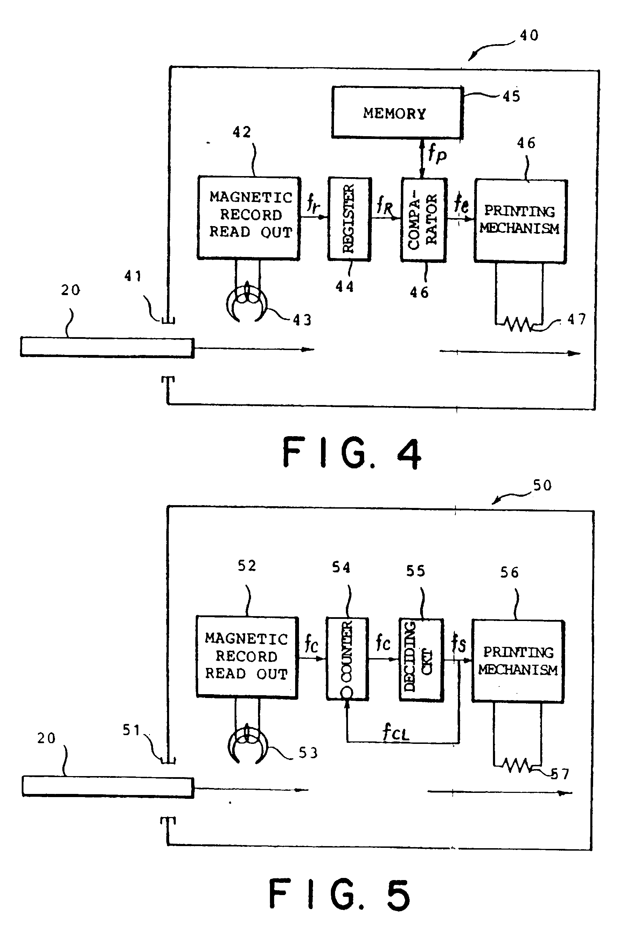

Fig. 4 is a block diagram view of the card processing device having means for indicating the visible mark on the card.

Referring to Fig. 4, the card processing device 40 comprises an opening 41 for inserting the card 20, a magnetic record read-out portion 42 having a magnetic head 43 for reading out magnetically recorded data from the card as a read out signal, a register 44 for temporarily holding the read-out signal, a memory 45 for memorizing a predetermined value for determining print of the visible mark, a comparator 46 for comparing contents in the register 44 and the memory 45, and a printing mechanism 46 including a heating head 47 for printing the visible mark.

The magnetic record read-out portion 43 reads out data recorded in the magnetic recording medium layer of the card 20 inserted through the card inserting opening 41, decides whether or not the card is correct to admit the card when the card is correct, and produces, as a read-out signal fr, the amount of money in data read out from the admitted card. The register 44 temporarily holds the read-out signal fr from the magnetic record read-out portion 43. The memory 45 memorizes predetermined numeral data fp. The numeral data is zero under a condition that the benefit should be provided when the card becomes invalid, alternatively a predetermined used amount (for example, 500 yen) under another condition that the mark should be provided before the card becomes invalid.

The comparator 46 compares the content fr held in the register 44 and the numeral data fp memorized in the memory 45 and delivers a coincident signal fe to the printing mechanism 46 only when the both are coincident with each other. In response to the coincident signal fe, the printing mechanism 46 drives the heating head 47 to print the visible mark onto the card 20.

Fig. 5 is a block diagram view illustrating another embodiment of the card processing device.

Referring to Fig. 5, the card processing device 50 shown therein comprises a card inserting opening 51, a magnetic record read-out portion 52 including a magnetic head 53, a counter 54, a deciding circuit 55 and a printing mechanism 56 including a heating head 57.

When the card 20 is inserted through the card inserting opening 51, the magnetic record read-out portion 52 reads out data magnetically recorded in the inserted card, decides whether or not the card 20 is correct, and admits the card 20 when the card 20 is correct to produce a one pulse signal fc. The counter 54 counts the pulse signal fc and produces a count signal fC.

A deciding circuit 45 decides whether or not the count signal fC is representative of a predetermined number and produces a print start signal fs when it is the predetermined number and a reset signal fcL for resetting the counter 54.

The counter 54 is cleared by the reset signal fcL from the deciding circuit 55.

In response to the print start signal fs, the printing mechanism 56 drives the heating head 57 to print the mark onto one surface of the card 20.

In use of the card processing device 50, when the number of cards processed by the card processing device becomes equal to the predetermined value, the mark is printed onto one card of the number so that the user of the card can obtain the benefit.

The card processing device in the above-mentioned embodiments is shown to have heaters as heads 47 and 57, providing that the card 20 has a mark previously printed with thermosensitive coloring ink.

In the present invention, pictorial designs, patterns, characters and combinations thereof can be used as the visible mark, and the printing of them can be made over ornamental pictures and statements printed on the card, or reprinted after erasing those printed matters. These over printing or reprinting can be made by the above-mentioned thermosensitive system. Alternatively, the mark can be printed with transparent ink which is readily colored by chemical reaction, and any coloring agent for coloring the ink is injected onto the card surface from a nozzle of the printing mechanism.

The present invention has been described in connection with the prepaid card. However, it will be understood by those skilled in the art that the present invention can be applied to the other cards such as the credit card, the member's card or the like which is used for obtaining goods or services.

## Claims

1. A method for processing a card (20) having data recorded thereon for obtaining goods or services, said method comprising reading said data at each use of the card (20), said data being representative of an amount of money, a valid time period or a number of times the card has been used,
characterized by
comparing said read-out data with a stored predetermined value and indicating a visible mark (30-35) on said card (20) if said data corresponds to said predetermined value, said mark (30-35) being representative of the presence of a benefit.

2. A method according to claim 1,
characterized by,
if said data represent an amount of money, subtracting a charge from said data to produce a residual amount, renewing said data on said card (20) representative of said residual amount, and comparing said residual amount with said predetermined value.

3. A method according to claim 2,
characterized in that
said predetermined value is zero.

4. A method according to claim 1,
characterized by,
if said data represent a valid time period, indicating said visible mark (30-35) when said time period is elapsed.

5. A method for processing cards (20) used for obtaining goods or services by a card processing device (40),
characterized by
counting the number of cards (20) processed by said card processing device (40) to produce a counted number, and
indicating a visible mark (30-35) onto that card (20) which is processed by said card processing device (40) when said counted number is a predetermined number, said mark being representative of the presence of a benefit.

6. A card processing device (40) for receiving and processing a card (20), said card (20) having data recorded thereon for obtaining goods or services, said data being representative of an amount of money, a valid time period or a number of times the card has been used, said device comprising reading
means (42) for reading out said data when said card (20) is received in said device (40), and memory means (45) for storing a predetermined value,
characterized by
comparing means (46) coupled to said reading means (42) and to said memory means (45) for comparing said read-out data with said predetermined value to produce a coincident signal when said read-out data is coincident with said predetermined value, and
generating means (46') coupled to said comparing means (46) responsive to said coincident signal for generating a visible mark (30-35) on said card (20) said mark being representative of the presence of a benefit.

7. A card processing device (50) for processing cards (20) used for obtaining goods or services,
characterized by
counting means (54, 55) for counting the number of cards (20) processed by said card processing device (50), said counting means being reset and producing a counter output signal when counting a predetermined card number, and
generating means (56) coupled to said counting means (54, 55) responsive to said counter output signal for generating a visible mark (30-35) onto that card (20) which is processed when said counter means (54, 55) counts said predetermined card number, said mark (30-35) being representative of the presence of a benefit.

8. A card processing device according to claim 6 or 7,
characterized in that
said generating means (46) comprises printing means.

9. A card processing device according to claim 6 or 7 for use with a card having an invisible mark previously printed with a thermosensitive coloring ink thereon,
said card processing device being characterized in that said generating means (46) comprises heating means for heating said thermosensitive coloring ink so as to color said thermosensitive coloring ink to produce said visible mark.

## Patentansprüche

1. Verfahren zum Behandeln einer Karte (20) mit darauf aufgezeichneten Daten zum Erwerb von Waren oder Dienstleistungen, wobei das Verfahren ein Auslesen der Daten bei jeder Benutzung der Karte (20) umfaßt und die Daten einen Geldbetrag, eine Gültigkeitsdauer oder ein Benutzungshäufigkeit der Karte angeben,
gekennzeichnet durch
Vergleichen der ausgelesenen Daten mit einem gespeicherten vorbestimmten Wert und Anzeigen eines sichtbaren Zeichens (30, 35) auf der Karte (20) wenn die Daten dem vorbestimmten Wert entsprechen, wobei das Zeichen (30, 35) eine Gewinnanzeige darstellt.

2. Verfahren nach Anspruch 1,
gekennzeichnet durch, wenn die Daten einen Geldbetrag darstellen, Abziehen eines Belastungsbetrags von den Daten zum Erzeugen eines Restbetrags, Erneuern der Daten auf der Karte (20), wobei diese den Restbetrag darstellen, und vergleichen des Restbetrags mit dem vorbestimmten Wert.

3. Verfahren nach Anspruch 2,
dadurch gekennzeichnet, daß der vorbestimmte Wert Null ist.

4. Verfahren nach Anspruch 1,
gekennzeichnet durch, wenn die Daten eine Gültigkeitsdauer darstellen, Anzeigen des sichtbaren Zeichens (30, 35), wenn die Gültigkeitsdauer abgelaufen ist.

5. Verfahren zum Behandeln von Karten (20), die zum Erwerb von Waren oder Dienstleistungen von einer Kartenbehandlungsvorrichtung (40) verwendet werden,
gekennzeichnet durch
Zählen der von der Kartenbehandlungsvorrichtung 40 behandelten Zahl von Karten (20) zum Bilden eines Zählwerts und Anzeigen eines sichtbaren Zeichens (30, 35), auf derjenigen Karte (20) die von der Kartenbehandlungsvorrichtung (40) gerade behandelt wird, wenn der Zählwert einer vorbestimmten Zahl entspricht, wobei das Zeichen eine Gewinnanzeige darstellt.

6. Kartenbehandlungsvorrichtung (40) zum Annehmen und Behandeln einer Karte (20), auf der Daten zum Erwerb von Waren oder Dienstleistungen aufgezeichnet sind, wobei die Daten einen Geldbetrag, eine Gültigkeitsdauer oder eine Benutzungshäufigkeit der Karte angeben und die Vorrichtung eine Lesevorrichtung (42) zum Auslesen der Daten, wenn die Karte (20) von der Vorrichtung (40) angenommen wurde, und eine Speichervorrichtung (45) zum Abspeichern eines vorbestimmten Werts aufweist,
gekennzeichnet durch
eine mit der Auslesevorrichtung (42) und der Speichervorrichtung (45) gekoppelte Vergleichsvorrichtung (46) zum Vergleichen der augelesenen Daten mit dem vorbestimmten Wert zum Erzeugen eines Übereinstimmungssignals bei Übereinstimmung der ausgelesenen Daten mit dem vorbestimmten Wert, und eine mit der Vergleichsvorrichtung (46) gekoppelte Erzeugungsvorrichtung (46'), die auf das Vorliegen des Übereinstimmungssignals mit der Erzeugung eines sichtbaren Zeichens (30-35) auf der Karte 20 antwortet, wobei das Zeichen eine Gewinnanzeige darstellt.

7. Kartenbehandlungsvorrichtung (50) zum Behandeln von Karten (20), die zum Erwerb von Waren oder Dienstleistungen verwendet werden,
gekennzeichnet durch
eine Zählvorrichtung (54, 55) zum Zählen der von der Kartenbehandlungsvorrichtung (50) behandelten Zahl von Karten (20), wobei die Zählvorrichtung bei Erreichen einer vorbestimmten Kartenzahl rückgesetzt wird und ein Zählerausgangssignal erzeugt, und
eine mit der Zählvorrichtung (54, 55) gekoppelte Erzeugungsvorrichtung (56), die auf das vorliegende Zählerausgangssignals mit dem Erzeugen eines sichtbaren Zeichens (30-35) auf derjenigen Karte (20) antwortet, die gerade behandelt wird, wenn die Zählvorrichtung (54, 55) die vorbestimmte Kartenzahl zählt, wobei das Zeichen eine Gewinnanzeige darstellt.

8. Kartenbehandlungsvorrichtung nach Anspruch 6 oder 7,
dadurch gekennzeichnet, daß die Erzeugungsvorrichtung (46) eine Druckeinrichtung aufweist.

9. Kartenbehandlungsvorrichtung nach Anspruch 6 oder 7 zur Verwendung mit einer Karte, die ein bereits vorher darauf mit wärmeempfindlicher Tinte gedrucktes unsichtbares Zeichen aufweist,
wobei die Kartenbehandlungsvorrichtung dadurch gekennzeichnet ist, daß die Erzeugungsvorrichtung (46) eine Heizvorrichtung zum Erhitzen der wärmeempfindlichen Tinte aufweist, um so die wärmeempfindliche Tinte zum Erzeugen des sichtbaren Zeichens zu färben.

## Revendications

1. Procédé de traitement d'une carte (20) comportant des données enregistrées sur celle-ci pour obtenir des marchandises ou des services, ce procédé comprenant la lecture des données à chaque utilisation de la carte (20), ces données étant représentatives d'une quantité d'argent, d'une durée de validité ou d'un nombre de fois que la carte a été utilisée, caractérisé en ce qu'il consiste à comparer la donnée de lecture avec une valeur prédéterminée stockée, et à indiquer une marque visible (30-35) sur la carte (20) si cette donnée correspond à la valeur prédéterminée, cette marque (30-35) étant représentative de la présence d'un avantage.

2. Procédé selon la revendication 1, caractérisé en ce que, si la donnée représente une quantité d'argent, le procédé consiste à soustraire un montant de la donnée pour produire une quantité restante, à renouveler la donnée sur la carte (20) pour représenter cette quantité restante, et à comparer la quantité restante à la valeur prédéterminée.

3. Procédé selon la revendication 2, caractérisé en ce que la valeur prédéterminée est zéro.

4. Procédé selon la revendication 1, caractérisé en ce que, si la donnée représente une durée de validité, le procédé consiste à indiquer la marque visible (30-35) lorsque cette durée est écoulée.

5. Procédé de traitement de cartes (20) servant à obtenir des marchandises ou des services, par un dispositif de traitement de cartes (40), caractérisé en ce qu'il consiste à compter le nombre de cartes (20) traitées par le dispositif de traitement de cartes (40) pour produire un nombre compté, et à indiquer une marque visible (30-35) sur la carte (20) qui est traitée par le dispositif de traitement de cartes (40), lorsque le nombre compté est un nombre prédéterminé, cette marque étant représentative de la présence d'un avantage.

6. Dispositif de traitement de cartes (40) pour recevoir et traiter une carte (20), cette carte (20) comportant sur celle-ci des données enregistrées servant à obtenir des marchandises ou des services et ces données étant représentatives d'une quantité d'argent, d'une durée de validité ou d'un nombre de fois que la carte a été utilisée, le dispositif comprenant des moyens de lecture (42) pour lire les données lorsque la carte (20) est reçue dans le dispositif (40), et des moyens de mémoire (45) pour stocker une valeur prédéterminée, dispositif caractérisé en ce qu'il comprend :
- des moyens de comparaison (46) couplés aux moyens de lecture (42) et aux moyens de mémoire (45) pour comparer la donnée de lecture avec la valeur prédéterminée de manière à produire un signal de coïncidence lorsque la donnée de lecture coïncide avec la valeur prédéterminée, et
- des moyens de génération (46') couplés aux moyens de comparaison (46) et répondant au signal de coïncidence pour générer une marque visible (30-35) sur la carte (20), cette marque étant représentative de la présence d'un avantage.

7. Dispositif de traitement de cartes (50) pour traiter des cartes (20) servant à obtenir des marchandises ou des services, caractérisé en ce qu'il comprend :
- des moyens de comptage (54, 55) pour compter le nombre de cartes (20) traitées par le dispositif de traitement de cartes (50), ces moyens de comptage étant remis à l'état initial et produisant un signal de sortie de compteur lorsqu'ils comptent un numéro de carte prédéterminé, et
- des moyens de génération (56) couplés aux moyens de comptage (54, 55) et répondant au signal de sortie de compteur pour générer une marque visible (30-35) sur la carte (20) qui est traitée lorsque les moyens de comptage (54, 55) comptent le numéro de carte prédéterminé, cette marque (30-35) étant représentative de la présence d'un avantage.

8. Dispositif de traitement de cartes selon la revendication 6 ou 7, caractérisé en ce que les moyens de génération (46) comprennent des moyens d'impression.

9. Dispositif de traitement de cartes selon la revendication 6 ou 7, destiné à être utilisé avec une carte comportant une marque invisible préalablement imprimée sur celle-ci par une encre colorante thermosensible, ce dispositif de traitement de cartes étant caractérisé en ce que les moyens de génération (46) comprennent des moyens de chauffage pour chauffer l'encre colorante thermosensible de manière à colorer cette encre colorante thermosensible pour produire la marque visible.
